# EUROPEAN PATENT SPECIFICATION

(11) **EP 3 685 905 B1**
(45) Date of publication and mention of the grant of the patent: **28.07.2021**
(21) Application number: 20152946.8
(22) Date of filing: 21.01.2020
(51) Int. Cl.: B01D 53/32, B01D 53/56, B01D 53/92, F01N 3/08, F01N 3/28, C25B 9/23, C25B 9/70, F01N 3/01, F01N 3/26, F01N 13/00

(54) **ELECTROCHEMICAL REACTOR**
ELEKTROCHEMISCHER REAKTOR
RÉACTEUR ÉLECTROCHIMIQUE

(30) Priority: 23.01.2019 JP 2019009765
(43) Date of publication of application: 29.07.2020
(73) Proprietor: TOYOTA JIDOSHA KABUSHIKI KAISHA, Toyota-shi, Aichi-ken, 471-8571 (JP)
(72) Inventor: SAKUMA, Tetsuya, Aichi-ken, 471-8571 (JP); TAKADA, Keishi, Aichi-ken, 471-8571 (JP); NOTAKE, Yasumasa, Aichi-ken, 471-8571 (JP)
(74) Representative: J A Kemp LLP

(56) References cited:
- EP-A1- 2 067 948
- DE-A1-102010 030 394
- JP-A- 2016 014 376
- US-A1- 2009 173 623
- US-A1- 2014 166 477

## Description

### FIELD

The present disclosure relates to an electrochemical reactor.

### BACKGROUND

Known in the past has been an electrochemical reactor including a plurality of cells respectively provided with ion conducting solid electrolyte layers and with anode layers and cathode layers arranged on the surfaces of the solid electrolyte layers (for example, PTL 1). In such an electrochemical reactor, if the electrochemical reactor is supplied with current so as to flow from the anode layers through the solid electrolyte layers to the cathode layers, NOx is reduced to N₂ on the cathode layers and purified.

In particular, in the electrochemical reactor described in PTL 1, a plurality of cells are arranged aligned in a direction perpendicular to the direction of flow of exhaust and parallel with each other. The exhaust gas flows through passages defined by two cells. The NO_{X} in the exhaust gas is purified while the exhaust gas flows through the passages.

### [CITATIONS LIST]

### [PATENT LITERATURE]

[PTL 1] Japanese Unexamined Patent Publication No. 2009-138522

### SUMMARY

### [TECHNICAL PROBLEM]

In this regard, in the electrochemical reactor described in PTL 1, the passages defined by the cells arranged at the end most positions among the plurality of cells arranged aligned in parallel are not faced by either an anode layer or a cathode layer. Further, in a passage not faced by a cathode layer, the NO_{X} in the inflowing exhaust gas is not purified, but flows out as it is. As a result, the purification rate of the exhaust gas by the electrochemical reactor cannot be sufficiently high. There is room for improvement.

In consideration of the above problem, an object of the present disclosure is to provide an electrochemical reactor decreasing the passages where exhaust gas is not purified so as to thereby raise the exhaust gas purification rate.

### [SOLUTION TO PROBLEM]

The gist of the present disclosure is as follows:
(1) An electrochemical reactor for exhaust gas purification comprising a plurality of plate-shaped members and a plurality of passages defined by the plurality of plate-shaped members, the passages being for the flow of exhaust gas therethrough, wherein
   each plate-shaped member comprises a cell including an ion conducting solid electrolyte layer, an anode layer arranged on a surface of the solid electrolyte layer, and a cathode layer arranged on a surface of the solid electrolyte layer at an opposite side to the surface at which the anode layer is arranged, and
   characterised in that the plate-shaped members are configured so that, for all of the passages, both of an anode layer of at least one plate-shaped member among the plurality of plate-shaped members defining the passages and a cathode layer of at least one other plate-shaped member among the plurality of plate-shaped members defining the passages face the insides of the passages and wherein all of the plate-shaped members (63, 83, 84, 87) are configured so that the two surfaces of each plate-shaped member (63, 83, 84, 87) face other respectively different plate-shaped members (63, 83, 84, 87).
(2) The electrochemical reactor according to (1), further comprising an outer circumferential wall positioned at an outer circumference of the electrochemical reactor, wherein
   the plurality of the plate-shaped members are joined to an inner surface of the outer circumferential wall, and
   all of the plate-shaped members joined to the inner surface of the outer circumferential wall are arranged so that an anode layer of one plate-shaped member among adjoining plate-shaped members and a cathode layer of the other plate-shaped member face each other.
(3) The electrochemical reactor according to (2), wherein at least part of the plurality of plate-shaped members joined to the inner surface of the outer circumferential wall are configured so that adjoining plate-shaped members are arranged at an angle with respect to each other.
(4) The electrochemical reactor according to (3), wherein at least part of the plurality of plate-shaped members joined to the inner surface of the outer circumferential wall are arranged radially.
(5) The electrochemical reactor according to any one of the above (1) to (4), wherein the plate-shaped members comprise, at a cross-section perpendicular to the direction of extension of the passages, inside plate-shaped members provided at the inside of the electrochemical reactor in the radial direction and outside plate-shaped members provided at the outside from the inside plate-shaped members in the radial direction, the inside plate-shaped members and the outside plate-shaped members being arranged radially and the outside plate-shaped members being more numerous than the inside plate-shaped members.

### [ADVANTAGEOUS EFFECTS OF INVENTION]

According to the present disclosure, the number of passages where exhaust gas is not purified is decreased whereby the purification rate of exhaust gas is improved.

### BRIEF DESCRIPTION OF DRAWINGS

FIG. 1 is a schematic view of the configuration of an internal combustion engine.
FIG. 2 is a cross-sectional view of a reactor in a cross-section perpendicular to a direction of flow of exhaust.
FIG. 3 is a cross-sectional view of a reactor in a cross-section parallel to the direction of flow of exhaust seen along III-III of FIG. 2.
FIG. 4 is an enlarged cross-sectional view schematically showing part of the cross-sectional view of FIG. 2.
FIG. 5 is a view schematically showing one cell configuring part of the reactor and a current supply mechanism for that cell.
FIG. 6 is a cross-sectional view, similar to FIG. 2, of a reactor where, different from the embodiment according to the present disclosure, a plurality of plate-shaped members are arranged in parallel to each other.
FIG. 7 is a cross-sectional view, similar to FIG. 2, of a reactor according to a second embodiment.
FIG. 8 is a cross-sectional view, similar to FIG. 2, of a reactor according to a third embodiment.
FIG. 9 is an enlarged cross-sectional view schematically showing part of the cross-sectional view of FIG. 8.
FIG. 10 is a cross-sectional view, similar to FIG. 2, of a reactor according to the third embodiment.

### DESCRIPTION OF EMBODIMENT

Below, referring to the drawings, embodiments will be explained in detail. Note that, in the following explanation, similar component elements are assigned the same reference numerals.

### First Embodiment

### Explanation of Internal Combustion Engine as a Whole

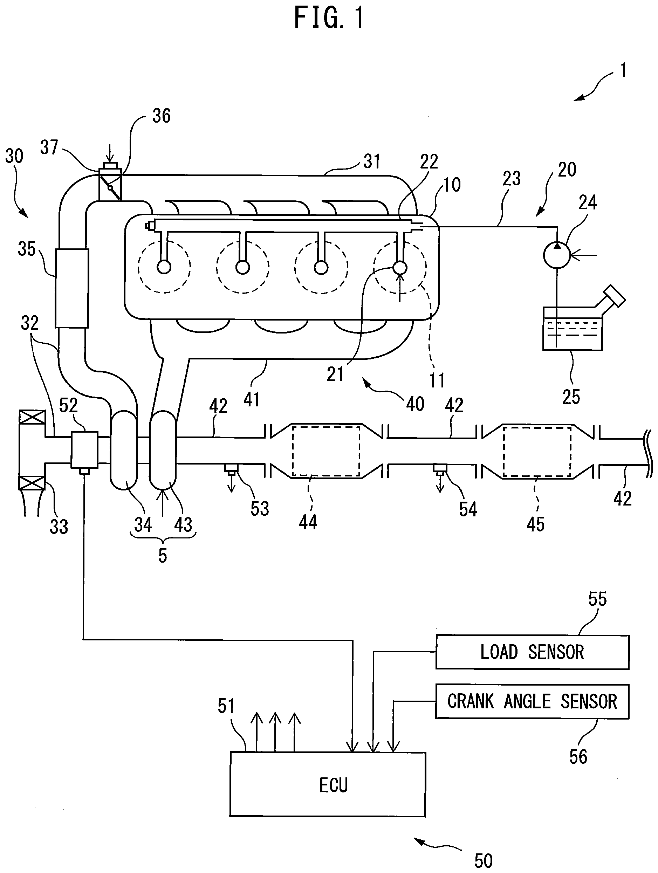

Referring to FIG. 1, the configuration of an internal combustion engine 1 mounting an electrochemical reactor according to first embodiment will be explained. FIG. 1 is a schematic view of the configuration of the internal combustion engine 1. As shown in FIG. 1, the internal combustion engine 1 is provided with an engine body 10, fuel feed system 20, intake system 30, exhaust system 40 and control device 50.

The engine body 10 is provided with a cylinder block in which a plurality of cylinders 11 are formed, a cylinder head and a crank case. A piston is arranged in each cylinder 11, and each cylinder 11 is connected to intake ports and exhaust port.

The fuel feed system 20 is provided with fuel injectors 21, a delivery pipe 22, fuel feed pipe 23, fuel pump 24, and fuel tank 25. Each fuel injector 31 is arranged in the cylinder head so as to directly inject fuel into each cylinder 11. The fuel pumped out by the fuel pump 24 is supplied through the fuel feed pipe 23 to the delivery pipe 22, and then is injected from the fuel injector 21 into the cylinder 11.

The intake system 30 is provided with an intake manifold 31, intake pipe 32, air cleaner 33, compressor 34 of a turbocharger 5, intercooler 35, and throttle valve 36. The intake port of each cylinder 11 is communicated through the intake manifold 31 and the intake pipe 32 with the air cleaner 33. The intake pipe 32 is provided with the compressor 34 of the exhaust turbocharger 5 for compressing and discharging intake air, and the intercooler 35 for cooling the air compressed by the compressor 34. The throttle valve 36 is driven so as to be opened and closed, by a throttle valve drive actuator 37.

The exhaust system 40 is provided with an exhaust manifold 41, exhaust pipe 42, turbine 43 of the exhaust turbocharger 5, exhaust purification catalyst 44, and electrochemical reactor (hereinafter, simply referred to as "reactor") 45. The exhaust port of each cylinder 11 is communicated through the exhaust manifold 51 and the exhaust pipe 52 with the exhaust purification catalyst 44, and the exhaust purification catalyst is communicated through the exhaust pipe 42 with the electrochemical reactor 45. The exhaust purification catalyst 44 is, for example, a three-way catalyst or NOx storage reduction catalyst, and purify composition in the exhaust gas, such as NOx or unburned HC when the temperature thereof is equal to or greater than a constant activation temperature. In the exhaust pipe 42, the turbine 43 of the exhaust turbocharger 5, which is driven to rotate by the energy of the exhaust gas, is provided. The exhaust port, exhaust manifold 41, exhaust pipe 42, exhaust purification catalyst 44 and reactor 45 form an exhaust passage. Therefore, the reactor 45 is disposed in the exhaust passage. Note that the exhaust purification catalyst 44 may be provided downstream side of the reactor 45 in the flow direction of the exhaust gas (hereinafter referred to as "exhaust flow direction").

The control device 50 is provided with an electronic control unit (ECU) 51 and various types of sensors. The sensors includes, for example, a flow rate sensor 52 for detecting the flow rate of air flowing through the intake pipe 32, an air-fuel ratio sensor 53 for detecting the air-fuel ratio of the exhaust gas, a NOx sensor 54 for detecting the NOx concentration of the exhaust gas flowing into the reactor 45. These sensors are connected to ECU. Further, the ECU 51 is connected to the actuators controlling the operation of the internal combustion engine 1. In the example shown in FIG. 1, the ECU51 is connected to the fuel injectors 21, fuel pump 24 and throttle valve drive actuator 37 and controls these actuators.

### Configuration of Electrochemical Reactor

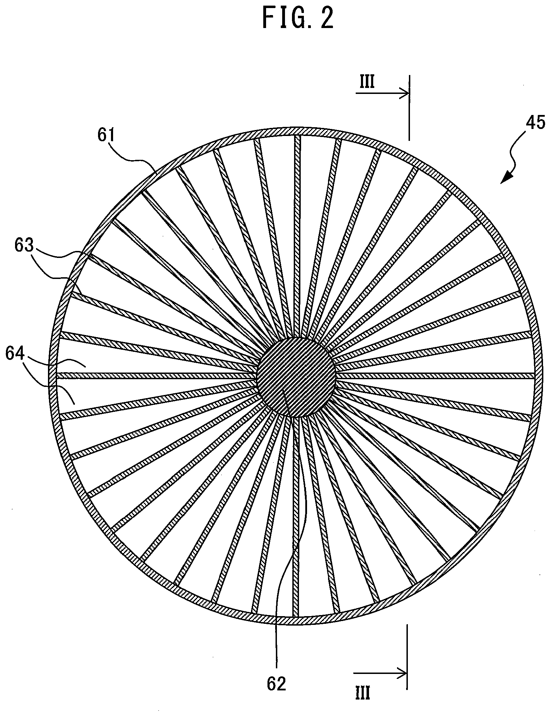

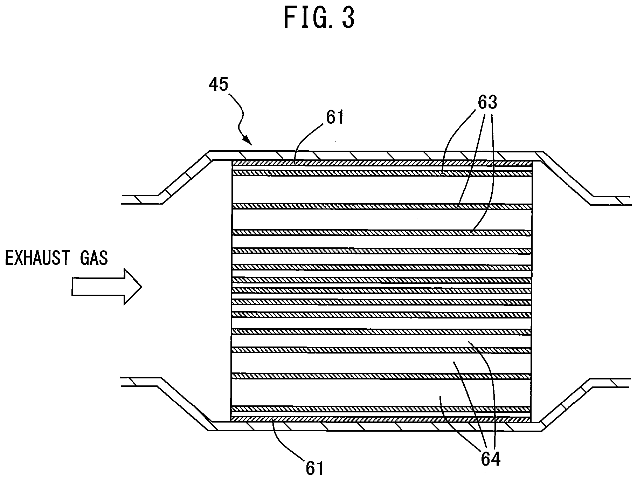

Next, referring to FIGS. 2 to 5, the configuration of the reactor 45 according to the present embodiment will be explained. FIG. 2 is a cross-sectional view of the reactor 45 in a cross-section perpendicular to the direction of flow of exhaust. Further, FIG. 3 is a cross-sectional view of the reactor 45 in a cross-section parallel to the direction of flow of exhaust, seen along III-III of FIG. 2. The arrow in FIG. 3 show the direction of flow of exhaust. Further, FIG. 3 illustrates the exhaust pipe 42 housing the reactor 45.

As will be understood from FIG. 2, the reactor 45, in the cross-section perpendicular to the direction of flow of exhaust, is comprised of a cylindrically shaped outer circumferential wall 61, a columnar shaped center axis part 62, a plurality of plate-shaped members 63 extending between the outer circumferential wall 61 and center axis part 62, and passages 64 defined by these outer circumferential wall 61, center axis part 62, and plate-shaped members 63.

The outer circumferential wall 61 is positioned at the outer circumference of the reactor 45 and is arranged so that its axis extends parallel to the direction of flow of exhaust. Further, the outer circumferential wall 61, as shown in FIG. 3, is arranged so that its outer circumferential surface contacts the inner circumferential surface of the exhaust pipe 42. Therefore, the outer circumferential wall 61 has a complementary shape with the exhaust pipe 42. At the inner surface of the outer circumferential wall 61, a plurality of plate-shaped members 63 are joined. In the present embodiment, all of the plate-shaped members 63 are joined with the inner surface of the outer circumferential wall 61. Note that, in the present embodiment, the outer circumferential wall 61 is formed in a cylindrical shape, but it may also be formed into a rectangular cross-section tubular shape, oval cross-section tubular shape, or any other shape so long as being tubular.

The center axis part 62 is arranged so as to be coaxial with the outer circumferential wall 61. Therefore, the center axis part 62 is also arranged so that its axis is parallel to the direction of flow of exhaust. Further, the center axis part 62 is formed so that the length of one turn about the outer circumference in the cross-section perpendicular to the direction of flow of exhaust is longer than the total of the thicknesses of all of the plate-shaped members 63. At the outer surface of the center axis part 62, a plurality of plate-shaped members 63 are joined. In the present embodiment, all of the plate-shaped members 63 are joined to the outer surface of the center axis part 62. Note that, in the present embodiment, the center axis part 62 is formed into a circular cross-section columnar shape, but it may also be formed into an angular cross-section columnar shape, an oval cross-section columnar shape, or any other shape so long as columnar.

Each plate-shaped member 63 is arranged so as to extend in the direction of flow of exhaust. Each plate-shaped member 63 is joined at one edge to the inner surface of the outer circumferential wall 61 and is joined at the edge at the opposite side to the above edge to the outer surface of the center axis part 62. The reactor 45 is provided with a large number of plate-shaped members 63. These plate-shaped members 63 are arranged aligned in the circumferential directions of the outer circumferential wall 61 and the center axis part 62. In particular, in the present embodiment, the plate-shaped members 63 are arranged aligned in the circumferential directions at equal angular intervals.

In particular, in the present embodiment, all of the plate-shaped members 63 are configured to extend radially from the center axis part 62. Therefore, all of the plate-shaped members 63 are configured so that the two surfaces of each plate-shaped member 63 face other respectively different plate-shaped members 63. Each plate-shaped member 63 is joined to the outer surface of the center axis part 62 so as to be perpendicular to the tangent of the outer surface of the center axis part 62. Similarly, each plate-shaped member 63 is joined to the inner surface of the outer circumferential wall 61 so as to extend perpendicular to the tangent of the inner surface of the circumferential wall 61. Therefore, in the present embodiment, the plate-shaped members 63 are configured so that the adjoining plate-shaped members 63 are arranged at angles with respect to each other.

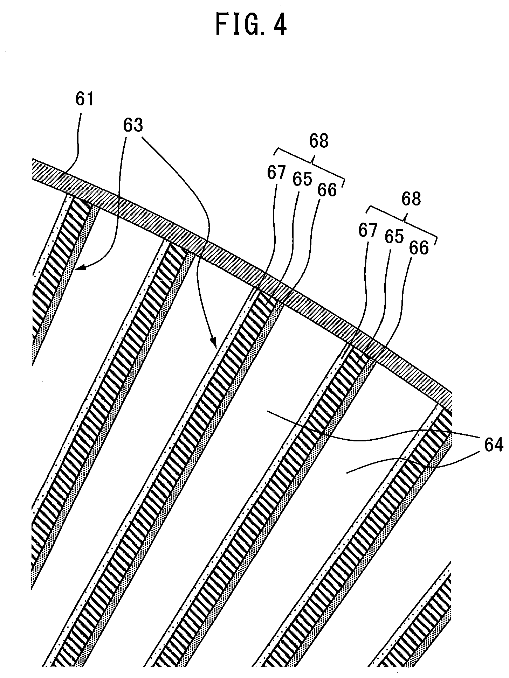

FIG. 4 is an enlarged cross-sectional view schematically showing a part of cross-sectional view in FIG. 2. As shown in FIG.4, the plate-shaped member 63 constitutes a cell 68 provided with a solid electrolyte layer 65, an anode layer 66 arranged on one surface of the solid electrolyte layer 65, and a cathode layer 67 arranged on the surface of the solid electrolyte layer 65 at the opposite side to the surface at which the anode layer 66 is arranged.

The solid electrolyte layer 65 includes a porous solid electrolyte having proton conductivity. As the solid electrolyte, for example, a perovskite type metal oxide MM'₁-ₓRₓO₃-α (M=Ba, Sr, Ca, M'=Ce, Zr, R=Y, Yb, for example, SrZrₓYb₁₋ₓO₃-α, SrCeO₃, BaCeO₃, CaZrO₃, SrZrO₃, etc.), a phosphate (for example, SiO₂-P₂O₅-based glass, etc.), metal doped SnₓIn₁₋ₓP₂O₇ (for example, SnP₂O₇, etc.) or zeolite (for example, ZSM-5) are used.

The anode layer 66 and the cathode layer 67 both include Pt, Pd, Rh, or other noble metals. Further, the anode layer 66 includes a substance able to hold (that is, able to adsorb and/or absorb) water molecules. Specifically, the substance able to hold water molecules includes zeolite, silica gel, activated alumina, etc. Further, the anode layer 66 may include a substance able to hold (i.e., able to adsorb and/or absorb) unburned HC (HC holding agent). Specifically, the substance able to hold HC includes zeolite, etc. On the other hand, the cathode layer 67 includes a substance able to hold (that is, able to adsorb and/or absorb) NOx (NOx holding agent). Specifically, the substance able to hold NOx includes K, Na, or another alkali metal, Ba or another alkali earth metal, La or another rare earth, etc.

As will be understood from FIG. 4, in the present embodiment, the plate-shaped members 63 are arranged so that among two adjoining plate-shaped members 63, the anode layer 66 of the cell 68 of one plate-shaped member 63 and the cathode layer 67 of the cell 68 of the other plate-shaped member 63 face each other. That is, adjoining plate-shaped members 63 among the plurality of plate-shaped members 63 joined to the inner surface of the outer circumferential wall 61 are arranged so that the anode layer 66 of one plate-shaped member 63 and the cathode layer 67 of the other plate-shaped member 63 face each other. From another viewpoint, in the present embodiment, all of the plate-shaped members 63 are arranged so that the anode layers 66 are positioned in a same direction in the circumferential direction and the cathode layers 67 are positioned in a same direction opposite to this in the circumferential direction.

The passages 64, as explained above, are defined by the outer circumferential wall 61, the center axis part 62, and the plurality of plate-shaped members 63. The passages 64 extend in the direction of flow of exhaust (therefore, the direction of flow of exhaust is the same as the direction of extension of the passages 64). The exhaust gas flowing into the reactor 45 flows passing through these passages 64, then flows out from the reactor 45. All of the exhaust gas flowing into the reactor 45 flows through any one of the passages 64.

In particular, in the present embodiment, each passage 64 is defined by two adjoining plate-shaped members 63 configured as explained above. As a result, in the present embodiment, among the two plate-shaped members 63 defining one passage 64, in the cell 68 of one plate-shaped member 63, the anode layer 66 is exposed to the passage 64, while in the cell 68 of the other plate-shaped member 63, the cathode layer 67 is exposed to the passage 64. Therefore, in the present embodiment, the plate-shaped members 63 are configured so that both anode layers 66 and cathode layers 67 are exposed to each of passages 64.

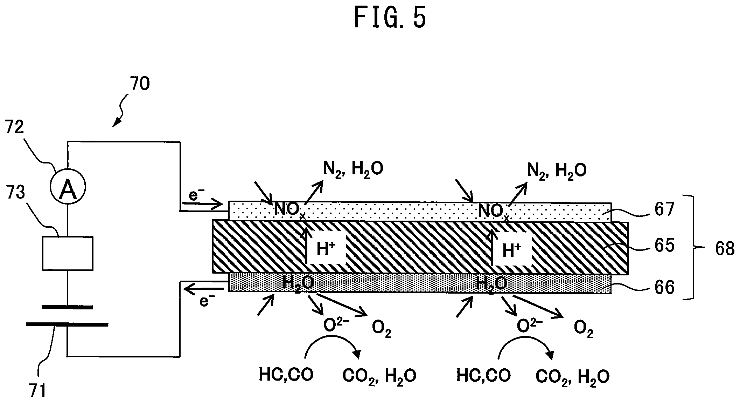

FIG. 5 is a view schematically showing one cell 68 configuring part of the reactor 45 and a current supply mechanism to that cell 68. As shown in FIG. 5, the current supply mechanism 70 to the cell 68 (that is, to the reactor 45) is provided with a power device 71, ammeter 72 and voltage regulator 73.

The power device 71 is connected to the cell 68 of the reactor 45, and supplies power to the cell 68. The positive electrode of the power device 71 is connected to the anode layer 66, while the negative electrode of the power device 71 is connected to the cathode layer 67.

The ammeter 72 detects the current supplied from the power device 71 to the cells 68 of the reactor 45.

The voltage regulator 73 is configured to be able to change the voltage applied between the anode layers 66 and the cathode layers 67. Further, the voltage regulator 73 is configured to change the magnitude of the current supplied to the reactor 45 so that it flows from the anode layers 66 through the solid electrolyte layers 65 to the cathode layers 67.

The power device 71 is connected in series with the ammeter 72. Further, the ammeter 72 is connected to the ECU 51 and sends the detected current value to the ECU 51. Further, the voltage regulator 73 is connected to the ECU 51 and is controlled by the ECU 51. In the present embodiment, the voltage regulator 73, for example, controls the voltage so that the current value detected by the ammeter 72 becomes the target value. Therefore, the voltage regulator 73 and ECU 51 function as an energizing control part for controlling the magnitude of voltage applied between the anode layer 66 and cathode layer 67 (i.e., energization to the reactor 45).

Note that, in the example shown in FIG. 5, the cells 68 are respectively independently connected to the power device 71, ammeter 72, and voltage regulator 73. However, for example, a plurality of cells 68 may also be connected in parallel with each other to the power device 71, etc. Alternatively, a series connected plurality of cells 68 may also be connected to the power device 71, etc. Alternatively, groups of cells respectively having series connected pluralities of cells 68 may be connected in parallel with each other to the power device 71, etc.

### Purification by Electrochemical Reactor

Referring to FIG. 5, the reactions occurring at the reactor 45 configured as explained above will be explained. At the reactor 45, if current flows from the power device 71 to the anode layers 66 and cathode layers 67, reactions such as shown in the following formulas occur at the anode layers 66 and cathode layers 67:

Anode side: 2H₂O→4H⁺+O₂+4e⁻

H₂O→2H⁺+O²⁻

Cathode side: 2NO+4H⁺+4e⁻→N₂+2H₂O

That is, at the anode layers 66, the water molecules held at the anode layers 66 are electrolyzed whereby oxygen and oxygen ion and protons are generated. The generated oxygen is discharged into the exhaust gas while the generated protons move through the solid electrolyte layers 65 from the anode layers 66 to the cathode layers 67. At the cathode layers 67, the NO held at the cathode layers 67 reacts with the protons and electrons whereby nitrogen and water molecules are generated.

Therefore, according to the present embodiment, by applying current from the power device 71 of the reactor 45 to the anode layers 66 and cathode layers 67 (i.e., by energizing the reactor 45), the NO held by the NOx holding agent of the cathode layer 67 can be reduced to N₂ and purified.

Further, at the anode layers 66, when the exhaust gas contains unburned HC or CO, etc., due to the reactions shown in the following formulas, the oxygen ions react with the HC and CO whereby carbon dioxide and water are generated (Note that, unburned HC contains various constituents, therefore in the following reaction formulas, unburned HC is represented as CₘHₙ). Therefore, according to the present embodiment, by applying current from the power device 71 of the reactor 45 to the anode layer 66 and cathode layer 67, the HC and CO in the exhaust gas can be oxidized and purified:

CₘHₙ+(2m+0.5n)O²⁻→mCO₂+0.5nH₂O+(4m+n)e⁻

CO+O²⁻→CO₂+2e⁻

In addition, if the anode layer 66 includes the HC holding agent, by applying current from the power device 71 of the reactor 45 to the anode layer 66 and cathode layer 67 (i.e., by energizing the reactor 45), HC held by the HC holding agent of the anode layer 66 can be reduced to water and carbon dioxide and purified.

As explained above, in the present embodiment, plate-shaped members 63 are arranged so that both of the anode layers 66 and cathode layers 67 are exposed to the passages 64. Therefore, in each passage 64, the NOx and HC or CO in the exhaust gas are purified by applying current from the power device 71.

### Action and Effects

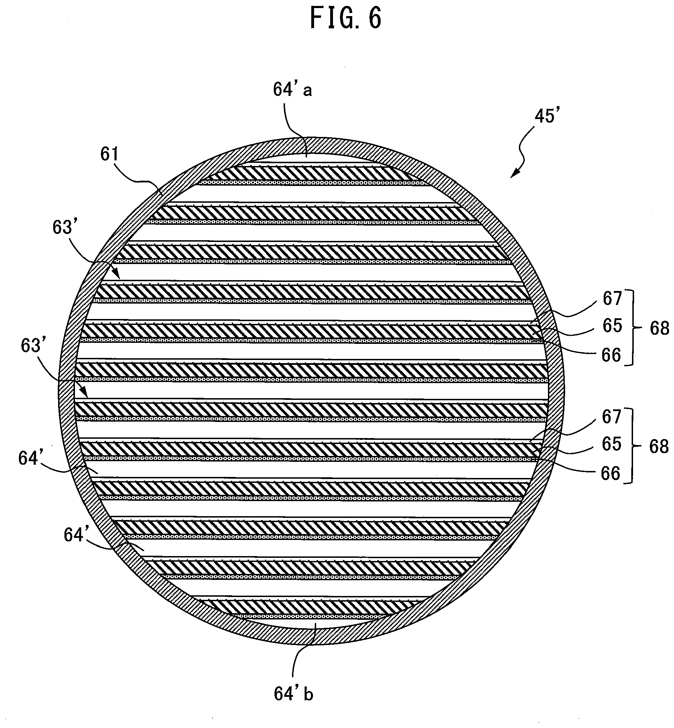

Referring to FIG. 6, the action of the electrochemical reactor 45 according to the present embodiment and the effects obtained by this electrochemical reactor 45 will be explained. FIG. 6 is a cross-sectional view, similar to FIG. 2, of a reactor 45' in which, unlike the present embodiment, a plurality of plate-shaped members 63' are arranged in parallel with each other.

In the example shown in FIG. 6, the plate-shaped members 63' are arranged aligned at certain intervals. As will be understood from FIG. 6, the plate-shaped members 63' are arranged so that, among two adjoining plate-shaped members 63', the anode layer 66 of the cell 68 of the one plate-shaped member 63' and the cathode layer 67 of the cell 68 of the other plate-shaped member 63' face each other. Therefore, basically, both an anode layer 66 and a cathode layer 67 face each passage 64' defined by the plate-shaped members 63' and the outer circumferential wall 61.

As explained above, if supplying current to the reactor 45', NO_{X} is purified at the anode layers 66, while HC or CO are purified at the cathode layers 67. Both an anode layer 66 and a cathode layer 67 face each passage 64', therefore according to the reactor 45', the NOx and HC and CO in the exhaust gas flowing through the passages 64' are purified.

In this regard, however, the passage 64'a defined by the plate-shaped member 63' arranged at one end (top end) among the plurality of aligned plate-shaped members 63' and the outer circumferential wall 61 (below, referred to as the "upper passage") faces the cathode layer 67 of this plate-shaped member 63', but does not face the anode layer 66 of any plate-shaped member 63'. For this reason, at the upper passage 64'a, even if the reactor 45 is supplied with current, the NO_{X} in the exhaust gas is not purified.

Similarly, the passage 64'b defined by the plate-shaped member 63' arranged at the end at the opposite side (bottom end) among the plurality of aligned plate-shaped members 63' and the outer circumferential wall 61 (below, referred to as the "lower passage") faces the anode layer 66 of this plate-shaped member 63', but does not face the cathode layer 67 of any plate-shaped member 63'. For this reason, at the lower passage 64'b, even if the reactor 45 is supplied with current, the HC and CO in the exhaust gas are not purified.

As opposed to this, in the reactor 45 according to the above embodiments, the plate-shaped members 63 are configured so that for each of all of the passages 64, both of the anode layer 66 of at least one plate-shaped member 63 among the plurality of plate-shaped members defining the passages 64 and the cathode layer 67 of at least one other plate-shaped member 63 among the plurality of plate-shaped members defining the passages 64 face the inside of the passage 64. Therefore, in the present embodiment, the plate-shaped members 63 are configured so that to each of all of the passages 64, both an anode layer 66 and a cathode layer 67 are exposed.

For this reason, according to the reactor 45 according to the present embodiment, if the reactor 45 is supplied with current, the NO_{X} and HC and CO in the exhaust gas are purified at all of the passages. Therefore, there are no longer any passages where the exhaust gas is not purified and accordingly it is possible to raise the purification efficiency of the exhaust gas by the reactor 45.

### Modification

Note that, an anode layer 66 may also be configured to include the two layers of an electroconductive layer including a noble metal having electroconductivity and a water molecule holding layer including a substance able to hold water molecules (or a water and HC holding layer including a substance able to hold water molecules or HC). In this case, on the surface of the solid electrolyte layer 65, an electroconductive layer is arranged, while on the surface of the electroconductive layer at the opposite side to the solid electrolyte layer 65 side, a water molecule holding layer (or a water and HC holding layer) is arranged.

Similarly, a cathode layer 67 may be configured to include the two layers of an electroconductive layer including a noble metal having electroconductivity and an NO_{X} holding layer including a substance able to hold NO_{X}. In this case, on the surface of the solid electrolyte layer 65, an electroconductive layer is arranged, while on the surface of the electroconductive layer at the opposite side to the solid electrolyte layer 65 side, an NOx holding layer is arranged.

Further, in the above embodiment, the outer circumferential wall 61, the center axis part 62, and the plate-shaped members 63 are formed as separate members and then joined together in production. However, the outer circumferential wall 61, the center axis part 62, and the plate-shaped members 63 may also be formed as an integral member. In this case, the outer circumferential wall 61, the center axis part 62, and the solid electrolyte layers 65 of the cells 68 of the plate-shaped members 63 are formed by the same material as an integral member.

Furthermore, in the above embodiment, the plate-shaped members 63 are arranged radially. However, the plate-shaped members 63 need not necessarily be arranged radially so long as the adjoining plate-shaped members are arranged at an angle with each other.

Furthermore, in the above embodiment, a solid electrolyte layer 65 of the reactor 45 includes a proton conductive solid electrolyte. However, the solid electrolyte layer 65 may also be configured so as to include, instead of a proton conducting solid electrolyte, an oxygen ion conducting solid electrolyte or other ion conducting solid electrolyte.

### Second Embodiment

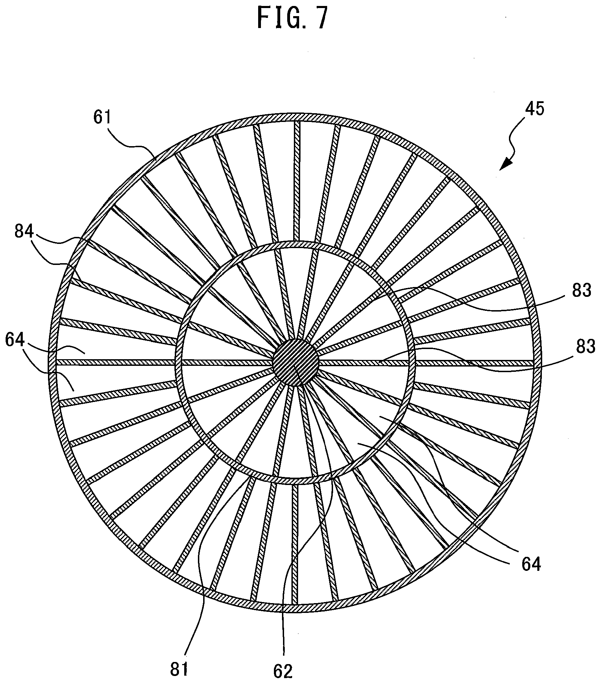

Next, referring to FIG. 7, an electrochemical reactor 45 according to a second embodiment will be explained. The configuration of the electrochemical reactor 45 according to the second embodiment is basically the same as the configuration of the electrochemical reactor 45 according to the first embodiment, therefore below, the parts different from the electrochemical reactor 45 according to the first embodiment will be focused on in the explanation.

FIG. 7 is a cross-sectional view, similar to FIG. 2, of the reactor 45 according to the second embodiment. As shown in FIG. 7, the reactor 45 comprises, in a cross-section perpendicular to the direction of flow of exhaust, a cylindrically shaped outer circumferential wall 61, a columnar shaped center axis part 62, a cylindrically shaped partition wall 81, a plurality of inside plate-shaped members 83 extending between the center axis part 62 and the partition wall 81, a plurality of outside plate-shaped members 84 extending between the outer circumferential wall 61 and the partition wall 81, and passages 64 defined by these outer circumferential wall 61, center axis part 62, partition wall 81, inside plate-shaped members 83, and outside plate-shaped members 84. The outer circumferential wall 61 and the center axis part 62 are configured in the same way as the first embodiment.

The partition wall 81 is a cylindrical shape having a radius smaller than the outer circumferential wall 61 (for example, half of the radius of the outer circumferential wall 61). The partition wall 81 is arranged so as to be coaxial with the outer circumferential wall 61.

Each inside plate-shaped member 83 is joined at one edge with an outer surface of the center axis part 62 and is joined at the edge at the opposite side to that edge with an inner surface of the partition wall 81. The reactor 45 is provided with a large number of the inside plate-shaped members 83. These inside plate-shaped members 83 are arranged aligned with each other in the circumferential directions of the center axis part 62 and partition wall 81. In particular, in the present embodiment, the inside plate-shaped members 83 are arranged aligned in the circumferential directions at equal angular intervals. In particular, in the present embodiment, all of the inside plate-shaped members 83 are configured to extend radially from the center axis part 62.

Each outside plate-shaped member 84 is joined at one edge with an outer surface of the partition wall 81 and is joined at the edge at the opposite side to that edge with an inner surface of the outer circumferential wall 61. Therefore, the outside plate-shaped members 84 are provided at the reactor 45 at the outside from the inside plate-shaped members in the radial direction. The reactor 45 is provided with a large number of the outside plate-shaped members 84. These outside plate-shaped members 84 are arranged aligned with each other in the circumferential directions of the outer circumferential wall 61 and partition wall 81. In particular, in the present embodiment, the outside plate-shaped members 84 are arranged aligned in the circumferential directions at equal angular intervals. In particular, in the present embodiment, all of the outside plate-shaped members 84 are configured to extend radially from the partition wall 81.

In the present embodiment, the outside plate-shaped members 84 are more numerous than the inside plate-shaped members 83. For this reason, the angular interval between adjoining outside plate-shaped members 84 is smaller than the angular interval between adjoining inside plate-shaped members 83. In the example shown in FIG. 7, the number of the outside plate-shaped members 84 is double the number of the inside plate-shaped members 83. Therefore, the angular interval between adjoining outside plate-shaped members 84 is half of the angular interval between adjoining inside plate-shaped members 83.

Here, in the reactor 45 according to the first embodiment, the plate-shaped members 63 are provided radially, therefore the intervals between adjoining plate-shaped members 63 are greater near the outer circumference of the reactor 45 compared with near the center of the reactor 45. If the interval between adjoining plate-shaped members 63 is greater, the exhaust gas flowing through the passages 64 between the members will be harder to purify.

As opposed to this, in the reactor 45 according to the present embodiment, the number of outside plate-shaped members 84 in the outside region is greater than the number of the inside plate-shaped members 83 in the inside region. As a result, even in the vicinity of the outer circumference of the reactor 45, the intervals between adjoining plate-shaped members 63 are kept from being greater. As a result, it is possible to make the efficiency of purification of the exhaust gas higher.

Note that, in the reactor 45 according to the second embodiment, the reactor 45 is divided into the two sections of the inside and the outside, and the plate-shaped members are arranged radially in each section. However, the reactor 45 may also be divided into three or more sections and the plate-shaped members arranged radially in each section. In this case, the more to the outside the section, the greater the number of plate-shaped members provided in the section.

### Third Embodiment

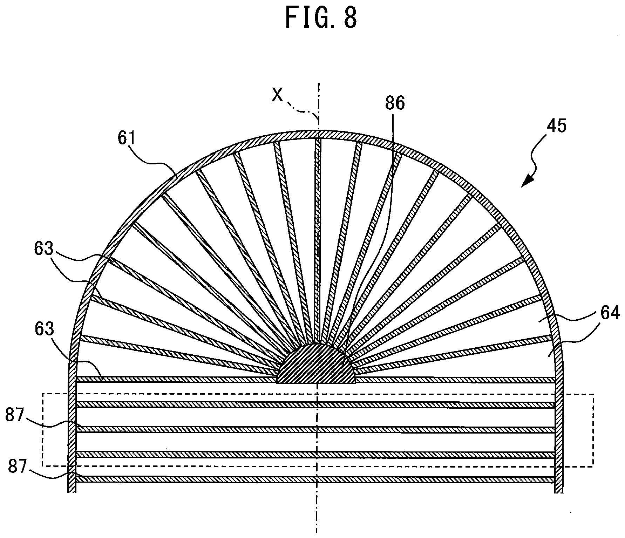

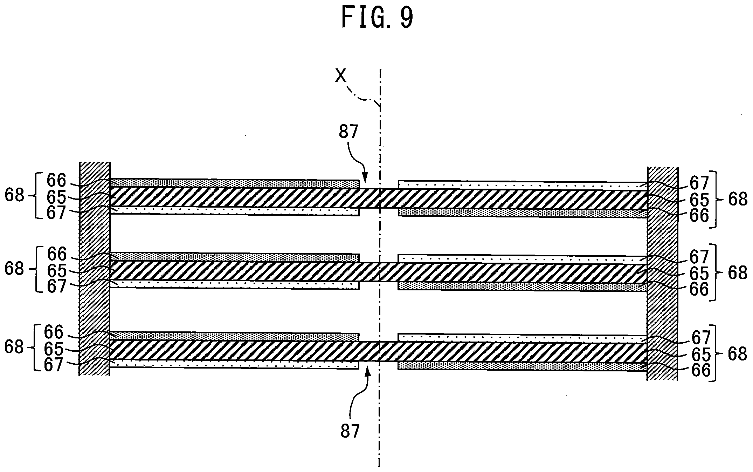

Next, referring to FIGS. 8 and 9, an electrochemical reactor 45 according to a third embodiment will be explained. The configuration of the electrochemical reactor 45 according to the third embodiment is basically the same as the configuration of the electrochemical reactor 45 according to the second embodiment, therefore below, the parts different from the electrochemical reactors according to the first embodiment and the second embodiment will be focused on in the explanation.

FIG. 8 is a cross-sectional view, similar to FIG. 2, of the reactor 45 according to the third embodiment. As will be understood from FIG. 8, the reactor 45 according to the present embodiment has an oval shaped cross-section in the cross-section perpendicular to the direction of flow of exhaust. Note that, in FIG. 8, only the part of half of the oval shaped reactor 45 split by the short axis is shown, but the omitted part is formed line symmetric with the part shown in FIG. 8.

As shown in FIG. 8, the reactor 45 according to the third embodiment is provided with, in the cross-section perpendicular to the direction of flow of exhaust, an outer circumferential wall 61 having an oval shape, two semi columnar center axis parts 86 (in FIG. 8, only one shown), a plurality of radial plate-shaped members 63 extending radially between the outer circumferential wall 61 and the center axis parts 86, and a plurality of parallel plate-shaped members 87 extending in parallel to each other.

The two center axis parts 86 are respectively arranged coaxially with the parts of the outer circumferential wall 61 having the semicircular cross-sections, in the cross-section perpendicular to the direction of flow of exhaust. In particular, the center axis parts 86 are arranged so that in the cross-section perpendicular to the direction of flow of exhaust, the outer surfaces of the semicircular shapes face the cross-sections of the semicircular shapes of the outer circumferential wall 61. Note that, in the present embodiment, the center axis parts 86 are formed into semicircular columnar shapes, but it may also be formed into other shapes so long as columnar.

The radial plate-shaped members 63 are formed in the same way as the plate-shaped members in the first embodiment.

The parallel plate-shaped members 87 are arranged so as to extend in the direction of flow of exhaust and be parallel with each other. In particular, the parallel plate-shaped members 87 are arranged to extend parallel to the radial plate-shaped members 63 positioned at the two ends in the circumferential direction among the radial plate-shaped members 63 arranged aligned in the circumferential direction.

FIG. 9 is an enlarged cross-sectional view schematically showing the part surrounded by broken lines in FIG. 8. As will be understood from FIG. 9, one parallel plate-shaped member 87 is configured having two cells 68. In the present embodiment, the two cells 68 of the parallel plate-shaped member 87 have a common solid electrolyte layer 65.

Further, in the present embodiment, the parallel plate-shaped members 87 are configured to respectively have one cell each of two sides of a long axis X of the oval shaped outer circumferential wall 61. The two cells 68 are configured so that the anode layer 66 of one cell 68 is arranged on same surface of the solid electrolyte layer 65 (first surface) as the cathode layer 67 of the other cell 68. In addition, the two cells 68 are configured so that the cathode layer 67 of one cell 68 is arranged on same surface of the solid electrolyte layer 65 (second surface on the opposite side to first surface) as the anode layer 68 of the other cell 68.

As a result, in the present embodiment, the adjoining plate-shaped members (including both radial plate-shaped members 63 and parallel plate-shaped members 87) in the plate-shaped members joined to the inner surface of the outer circumferential wall 61 are all arranged so that the anode layer of one plate-shaped member and the cathode layer of the other plate-shaped member face each other. Further, in the present embodiment, in only part of the plurality of plate-shaped members joined to the inner surface of the outer circumferential wall 61 (only radial plate-shaped members 63), the adjoining plate-shaped members are arranged at an angle from each other, specifically, radially.

Even when configuring the reactor 45 like in the present embodiment, the plate-shaped members 63 are configured so that both anode layers 66 and cathode layers 67 are exposed at all of the passages 64. Therefore, even according to the reactor 45 according to the present embodiment, if supplying current to the reactor 45, the NO_{X} and HC and CO in the exhaust gas are purified at all of the passages. Therefore, there are no longer passages where exhaust gas is not purified and, accordingly, the efficiency of purification of exhaust gas by the reactor 45 can be raised.

Note that, in the present embodiment, the parallel plate-shaped members 87 include two cells sharing a single solid electrolyte layer 65. However, the parallel plate-shaped members 87 may also be configured to have two cells separated into two by an insulator provided near the long axis X. Alternatively, the reactor 45 may also be configured to further include an insulating partition wall extending along the long axis X and have parallel plate-shaped members 87 provided with single cells at their either sides.

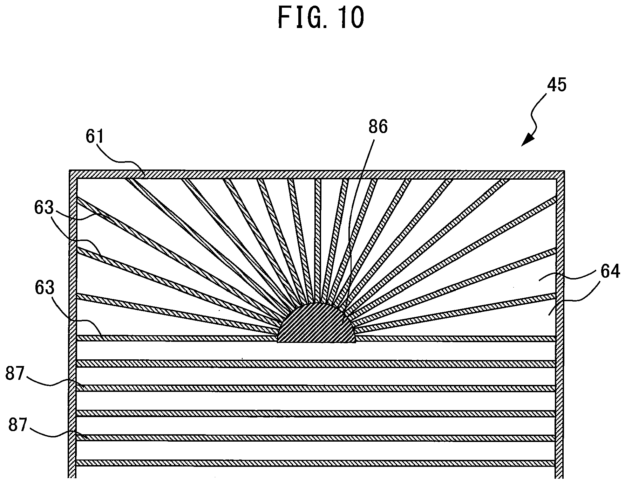

Further, in the present embodiment, the reactor 45 is configured so as to have an outer shape of an oval shape in the cross-section perpendicular to the direction of flow of exhaust. However, the reactor 45, for example, as shown in FIG. 10, may also be configured so as to have an outer shape of a rectangular shape.

Above, preferred embodiments according to the present disclosure were explained, but the present disclosure is not limited to these embodiments and can be modified and changed in various ways within the scope of the claims.

## Claims

1. An electrochemical reactor (45) for exhaust gas purification comprising a plurality of plate-shaped members (63, 83, 84, 87) and a plurality of passages (64) defined by the plurality of plate-shaped members (63, 83, 84, 87), the passages being for the flow of exhaust gas therethrough, wherein
each plate-shaped member (63, 83, 84, 87) comprises a cell (68) including an ion conducting solid electrolyte layer (65), an anode layer (66) arranged on a surface of the solid electrolyte layer, and a cathode layer (67) arranged on a surface of the solid electrolyte layer at an opposite side to the surface at which the anode layer (66) is arranged, and
**characterised in that**:
the plate-shaped members (63, 83, 84, 87) are configured so that, for all of the passages (64), both of an anode layer (66) of at least one plate-shaped member (63, 83, 84, 87) among the plurality of plate-shaped members (63, 83, 84, 87) defining the passages (64) and a cathode layer (67) of at least one other plate-shaped member (63, 83, 84, 87) among the plurality of plate-shaped members (63, 83, 84, 87) defining the passages face the passages (64), and
wherein all of the plate-shaped members (63, 83, 84, 87) are configured so that the two surfaces of each plate-shaped member (63, 83, 84, 87) face other respectively different plate-shaped members (63, 83, 84, 87).

2. The electrochemical reactor according to claim 1, further comprising an outer circumferential wall (61) positioned at an outer circumference of the electrochemical reactor (45), wherein
the plurality of the plate-shaped members (63, 84, 87) are joined to an inner surface of the outer circumferential wall (61), and
all of the plate-shaped members ((63, 84, 87) joined to the inner surface of the outer circumferential wall (61) are arranged so that an anode layer (66) of one plate-shaped member (63, 84, 87) among adjoining plate-shaped members (63, 84, 87) and a cathode layer (67) of the other plate-shaped member (63, 84, 87) face each other.

3. The electrochemical reactor according to claim 2, wherein at least part of the plurality of plate-shaped members (63, 84, 87) joined to the inner surface of the outer circumferential wall (61) are configured so that adjoining plate-shaped members (63, 84, 87) are arranged at an angle with respect to each other.

4. The electrochemical reactor according to claim 3, wherein at least part of the plurality of plate-shaped members (63, 84, 87) joined to the inner surface of the outer circumferential wall (61) are arranged radially.

5. The electrochemical reactor according to any one of claims 1 to 4, wherein the plate-shaped members (63, 83, 84, 87) comprise, at a cross-section perpendicular to the direction of extension of the passages (64), inside plate-shaped members (83) provided at the inside of the electrochemical reactor in the radial direction and outside plate-shaped members (84) provided at the outside from the inside plate-shaped members (83) in the radial direction, the inside plate-shaped members (83) and the outside plate-shaped members (84) being arranged radially and the outside plate-shaped members (84) being more numerous than the inside plate-shaped members (83).

## Patentansprüche

1. Elektrochemischer Reaktor (45) für die Abgasreinigung, umfassend eine Mehrzahl von plattenförmigen Elementen (63, 83, 84, 87) und eine Mehrzahl von Durchgängen (64), die durch die Mehrzahl von plattenförmigen Elementen (63, 83, 84, 87) definiert sind, wobei die Durchgänge für den Durchfluss von Abgas dahindurch sind, wobei
jedes plattenförmige Element (63, 83, 84, 87) eine Zelle (68) umfasst, die eine ionenleitende Festelektrolytschicht (65), eine Anodenschicht (66), die auf einer Oberfläche der Festelektrolytschicht angeordnet ist, und eine Kathodenschicht (67) beinhaltet, die auf einer Oberfläche der Festelektrolytschicht an einer der Oberfläche, an der die Anodenschicht (66) angeordnet ist, gegenüberliegenden Seite angeordnet ist, und
**dadurch gekennzeichnet, dass**:
die plattenförmigen Elemente (63, 83, 84, 87) derart konfiguriert sind, dass für alle Durchgänge (64) sowohl eine Anodenschicht (66) wenigstens eines plattenförmigen Elements (63, 83, 84, 87) aus der Mehrzahl von plattenförmigen Elementen (63, 83, 84, 87), die die Durchgänge (64) definieren, als auch eine Kathodenschicht (67) wenigstens eines anderen plattenförmigen Elements (63, 83, 84, 87) aus der Mehrzahl von plattenförmigen Elementen (63, 83, 84, 87), die die Durchgänge definieren, den Durchgängen (64) zugewandt sind, und
wobei alle plattenförmigen Elemente (63, 83, 84, 87) derart konfiguriert sind, dass die zwei Oberflächen jedes plattenförmigen Elements (63, 83, 84, 87) anderen jeweils unterschiedlichen plattenförmigen Elementen (63, 83, 84, 87) zugewandt sind.

2. Elektrochemischer Reaktor nach Anspruch 1, ferner umfassend eine äußere Umfangswand (61), die an einem äußeren Umfang des elektrochemischen Reaktors (45) positioniert ist, wobei
die Mehrzahl von plattenförmigen Elementen (63, 84, 87) mit einer inneren Oberfläche der äußeren Umfangswand (61) verbunden sind, und
alle plattenförmigen Elemente ((63, 84, 87), die mit der inneren Oberfläche der äußeren Umfangswand (61) verbunden sind, derart angeordnet sind, dass eine Anodenschicht (66) eines plattenförmigen Elements (63, 84, 87) aus benachbarten plattenförmigen Elementen (63, 84, 87) und eine Kathodenschicht (67) des anderen plattenförmigen Elements (63, 84, 87) einander zugewandt sind.

3. Elektrochemischer Reaktor nach Anspruch 2, wobei wenigstens ein Teil der Mehrzahl von plattenförmigen Elementen (63, 84, 87), die mit der inneren Oberfläche der äußeren Umfangswand (61) verbunden sind, derart konfiguriert sind, dass benachbarte plattenförmige Elemente (63, 84, 87) in einem Winkel zueinander angeordnet sind.

4. Elektrochemischer Reaktor nach Anspruch 3, wobei wenigstens ein Teil der Mehrzahl von plattenförmigen Elementen (63, 84, 87), die mit der inneren Oberfläche der äußeren Umfangswand (61) verbunden sind, radial angeordnet sind.

5. Elektrochemischer Reaktor nach einem der Ansprüche 1 bis 4, wobei die plattenförmigen Elemente (63, 83, 84, 87) in einem Querschnitt senkrecht zu der Erstreckungsrichtung der Durchgänge (64) plattenförmige Elemente (83) der Innenseite, die an der Innenseite des elektrochemischen Reaktors in der radialen Richtung bereitgestellt sind, und plattenförmige Elemente (84) der Außenseite, die an der Außenseite von den plattenförmigen Elementen (83) der Innenseite bereitgestellt sind, umfassen, wobei die plattenförmigen Elemente (83) der Innenseite und die plattenförmigen Elemente (84) der Außenseite radial angeordnet sind und die plattenförmigen Elemente (84) der Außenseite zahlreicher sind als die plattenförmigen Elemente (83) der Innenseite.

## Revendications

1. Réacteur électrochimique (45) pour épuration de gaz d'échappement, comprenant une pluralité d'éléments en forme de plaque (63, 83, 84, 87) et une pluralité de passages (64) définis par la pluralité d'éléments en forme de plaque (63, 83, 84, 87), les passages étant pour l'écoulement de gaz d'échappement à travers ceux-ci, dans lequel
chaque élément en forme de plaque (63, 83, 84, 87) comprend une cellule (68) incluant une couche d'électrolyte solide à conduction d'ions (65), une couche d'anode (66) agencée sur une surface de la couche d'électrolyte solide, et une couche de cathode (67) agencée sur une surface de la couche d'électrolyte solide sur un côté opposé à la surface sur laquelle la couche d'anode (66) est agencée, et
**caractérisé en ce que** :
les éléments en forme de plaque (63, 83, 84, 87) sont configurés pour que, pour la totalité des passages (64), le deux d'une couche d'anode (66) d'au moins un élément en forme de plaque (63, 83, 84, 87) parmi la pluralité d'éléments en forme de plaque (63, 83, 84, 87) définissant les passages (64) et d'une couche de cathode (67) d'au moins un autre élément en forme de plaque (63, 83, 84, 87) parmi la pluralité d'éléments en forme de plaque (63, 83, 84, 87) définissant les passages fassent face aux passages (64), et
dans lequel la totalité des éléments en forme de plaque (63, 83, 84, 87) sont configurés pour que les deux surfaces de chaque élément en forme de plaque (63, 83, 84, 87) fassent face à d'autres éléments en forme de plaque respectivement différents (63, 83, 84, 87).

2. Réacteur électrochimique selon la revendication 1, comprenant en outre une paroi circonférentielle extérieure (61) positionnée à une circonférence extérieure du réacteur électrochimique (45), dans lequel
la pluralité des éléments en forme de plaque (63, 84, 87) sont joints à une surface intérieure de la paroi circonférentielle extérieure (61), et
la totalité des éléments en forme de plaque (63, 84, 87) joints à la surface intérieure de la paroi circonférentielle extérieure (61) sont agencés pour qu'une couche d'anode (66) d'un élément en forme de plaque (63, 84, 87) parmi des éléments en forme de plaque contigus (63, 84, 87) et une couche de cathode (67) de l'autre élément en forme de plaque (63, 84, 87) se fassent face.

3. Réacteur électrochimique selon la revendication 2, dans lequel au moins une partie de la pluralité d'éléments en forme de plaque (63, 84, 87) joints à la surface intérieure de la paroi circonférentielle extérieure (61) sont configurés pour que des éléments en forme de plaque contigus (63, 84, 87) soient agencés à un angle les uns par rapport aux autres.

4. Réacteur électrochimique selon la revendication 3, dans lequel au moins partie de la pluralité d'éléments en forme de plaque (63, 84, 87) joints à la surface intérieure de la paroi circonférentielle extérieure (61) sont agencés radialement.

5. Réacteur électrochimique selon l'une quelconque des revendications 1 à 4, dans lequel les éléments en forme de plaque (63, 83, 84, 87) comprennent, à une section transversale perpendiculaire à la direction d'extension des passages (64), des éléments en forme de plaque intérieurs (83) prévus à l'intérieur du réacteur électrochimique dans la direction radiale et des éléments en forme de plaque extérieurs (84) prévus à l'extérieur par rapport aux éléments en forme de plaque intérieurs (83) dans la direction radiale, les éléments en forme de plaque intérieurs (83) et les éléments en forme de plaque extérieurs (84) étant agencés radialement et les éléments en forme de plaque extérieurs (84) étant plus nombreux que les éléments en forme de plaque intérieurs (83).
